# EUROPEAN PATENT SPECIFICATION

(11) **EP 2 681 686 B1**
(45) Date of publication and mention of the grant of the patent: **03.07.2019**
(21) Application number: 11860130.1
(22) Date of filing: 04.03.2011
(51) Int. Cl.: G06F 21/00, G06T 1/00, H04L 29/08, G06F 21/10

(54) **SYSTEM AND METHOD FOR WATERMARKING CONTENT FOR TRACKING MEDIA CONSUMPTION**
SYSTEM UND VERFAHREN ZUR WASSERZEICHENMARKIERUNG ZUR VERFOLGUNG VON MEDIENVERBRAUCH
SYSTÈME ET PROCÉDÉ PERMETTANT DE FILIGRANER UN CONTENU POUR SUIVRE UNE CONSOMMATION MULTIMÉDIA

(43) Date of publication of application: 08.01.2014
(73) Proprietor: Home Box Office, Inc., New York, NY 10036 (US)
(72) Inventor: MUSSER, Elmer, Gehman, Jr., St. James, NY 11780 (US)
(74) Representative: HGF Limited
(86) International application number: PCT/US2011/027171
(87) International publication number: WO 2012/121690

(56) References cited:
- WO-A1-03/094457
- US-A1- 2002 077 986
- US-A1- 2003 056 103
- US-A1- 2006 062 426
- US-A1- 2009 116 686
- US-A1- 2010 158 098
- US-B1- 7 020 704
- Digital Watermarking Alliance: "Digital Watermarking: Enhancing Consumer Access to Entertainment Content, Protecting Copyrights Digital Watermarking: Enhancing Consumer Access to Entertainment Content, Protecting Copyrights", DWA - HOUSE ENTERTAINMENT CAUCUS PRESENTATION, 5 February 2007 (2007-02-05), XP055135204, Retrieved from the Internet: URL:http://www.digitalwatermarkingalliance .org/docs/presentations/dwa_entertainmentc aucus.pdf [retrieved on 2014-08-19]
- Jiang Nan: "Digital watermarking infrastructure", , 22 October 2008 (2008-10-22), XP055135341, Retrieved from the Internet: URL:Http://www.cs.uwindsor.ca/~imran/cours es/60-520/li_yang.ppt [retrieved on 2014-08-19]

## Description

### FIELD OF THE INVENTION

The present invention relates to a system and method for watermarking content for tracking media consumption.

### BACKGROUND INFORMATION

Television and radio networks are two examples of networks in broadcast space. A network is an organization that delivers programs that may include recorded or live content, and may include movies, radio shows, and other audio and/or video content. The content may be delivered either as linear content or nonlinear content.

Linear content is provided in a serial format in which one program follows a previous program in time. A network providing linear content can provide only one program at any given moment in time. Thus, linear content follows a schedule or a timetable that users must follow to access the linear content. The scheduling of linear content involves a process of assigning content to time slots on the network. A database of the content may contain program identifiers, titles, durations and other supporting information, and the database may be organized in a serial format based on the schedule of the linear content. Thus, based on the network and the predetermined schedule, it can be determined what linear content was accessed at any particular time.

Nonlinear content, on the other hand, is scheduled within a window of time during which users may access the nonlinear content. A network providing nonlinear content may provide one program or multiple programs, e.g. a library of content, at any given moment in time. The nonlinear content is scheduled so that it is made available for access by users during a specified window of time, such as for example, a certain number of hours, days, weeks, or months. Nonlinear content may be selected by users on-demand, and may include, for example, video on demand (VOD), Web content, and/or content provided by another delivery method that does not follow a linear schedule.

Tracking media consumption is becoming increasingly complicated, for example, with the growth of Web and mobile media usage by end users, and additional varied modes of consumption available to end users. One exemplary method of tracking media consumption is watermarking, in which content is tagged with data in a manner that is not visible or audible to end users. Watermarking processes may hide the data within content so as not to cause a degradation of the content as received by users. Such watermark data may include identification marks, time stamps and other data types. Further, the recovery of watermark data may require an understanding of how the data was originally watermarked into the content. Moreover, watermarking, once added to content, cannot be removed. Accordingly, watermarking is generally added to content at the time of transmission and/or distribution after all other processing and/or conversion has been completed.

Watermark data may include, for example, audio watermarks and/or video watermarks. Audio watermarks may include audio data that is added to an existing audio stream of content at particular time increments. The audio watermarks may be added such that they are not audible to an end user. This may be accomplished, for example, by adding the audio watermark data while music, speech, and/or other audio output is present in a program such that the audio watermark data is masked by the content's music or speech. Similarly, video watermarks may include video data that is added to an existing video stream of content at particular time increments. The video watermarks may be added such that they are not visible to an end user. This may be accomplished, for example, by adding the video watermark data to corners, edges, dark sections, and/or other portions of the video stream of a program such that the video watermark data is masked by the content's video stream.

Further, the audio and/or video watermark data may be added to the content at a particular insertion rate. The particular time increments at which watermark data is added to content may depend on the desired resolution of tracking media consumption. That is, a higher frequency of watermark data insertion would provide more frequent data points, and thus higher resolution, with respect to tracking consumption, whereas a lower frequency of watermark data insertion would provide less frequent data points, and thus lower resolution, with respect to tracking consumption.

Watermark data may be recovered from content that has been accessed by users, for example, by a process called metering. In order to recover audio and/or video watermark data, a data collection device may be present at the location in which an end user accesses the content. The data collection device may then listen to (in the case of audio watermark data) and/or view (in the case of video watermark data) the content as it is output to the end user. The data collection device may be capable of identifying and recovering the watermarks that are not audible and/or visible to end users. The recovered watermarks may be processed in the data collection device and/or may be transferred to and/or processed at other processing center(s). Then, the recovered and/or processed data may be provided to networks or other entities that request such data in order to track media consumption, for example.

For watermarking linear content, the watermark data is added at the time of transmission of the content to an end user. The watermark data that is inserted into the linear content may include an identification mark and a time stamp. The identification mark may be unique to the assigned network, such that there is a one to one relationship between the identification mark and the network. Accordingly, each network may have its own unique identification mark. Further, because linear content follows a predetermined schedule, the identification mark may be used to identify the network, and the time stamp may identify the time at which content was accessed on the network, which time stamp may then be correlated with the particular content accessed by reference to the schedule and the identified network.

For watermarking nonlinear content, the watermark data is also added at the time of transmission of the content to an end user. The watermark data that is inserted into the nonlinear content may also include an identification mark and a time stamp. The identification mark may be unique to the assigned network, such that there is a one to one relationship between the identification mark and the network. Accordingly, each network may have its own unique identification mark.

However, because nonlinear content on a network may include a library of content that does not follow a predetermined schedule but rather is made available to users within a window of time, an identification of the network and a time stamp are not sufficient to identify the particular program accessed by an end user. For example, if Network A offers five Programs A1, A2, A3, A4, A5 during a particular window of time, and end user B accesses Program A5 during this window of time, merely identifying Network A and a time stamp which falls in the window of time during which all five Programs were available is not sufficient to identify the particular Program, i.e., Program A5, that was accessed by end user B. Thus, additional data related to the particular content accessed may be added to the watermark data in order to identify the particular content accessed. However, this adds additional complexity to the watermark data that is added to content, and as more data is included in watermarks, it may become more difficult to mask such watermarking within the content such that it does not detrimentally affect the content accessed by users.

Further, because nonlinear content may be accessed by multiple users from various different devices, each copy of the same nonlinear content may be uniquely watermarked, further adding complexity and resulting in a proliferation of data that must be stored and tracked. For example, if Program A1 is offered on Network A, and end users B, C, D each access Program A1 from unique devices, such as, for example, a cell phone, a computer, and a television, then three unique copies of Program A1 are processed and converted to be delivered to each requesting end user's device, and each end user B, C, D receives a unique copy of Program A1 converted to suit his/her device. Further, each unique copy of Program A1 includes unique watermark data added at the time of transmission and/or distribution to the end user. That is, because the watermark data is added to content at the time of transmission, each copy of a program, even if it is the same program on the same network, includes unique watermark data. More specifically, although the network identification may be the same for all copies of a program offered on a particular network, each copy will include a unique identifier for the program even though the underlying program is the same for all copies sent to unique devices.

Moreover, if a program is removed from the library of nonlinear content of a network so that it is no longer available and then later reassigned to the same network again and made available for access by end users, each copy of the program accessed by an end user again includes unique watermark data. Further, if a program is reassigned from one network to another network, each copy of the program accessed by an end user on the new network again includes unique watermark data. This is the case even though the actual program being accessed is the same for all the above copies on the two different networks. Thus, the amount of watermark data that must be stored and tracked in order to track consumption of a single program may become quite large. Further, the large amount of data created by the number of unique watermarks that may identify the same network and the same accessed program may lead to errors in the tracking and analysis of data. When these complexities are multiplied by the potentially large number of programs made available on a single network, the task of storing and tracking such voluminous watermark data may become extremely complicated. The problem may be further complicated when managing several networks, each of which offers a large library of content.

US 2003/056103A1 relates to a method of tracking audio or video content involving decoding a first forensic identifier and a second forensic identifier in a digital watermark, the first forensic identifier being associated with a forensic database and the second forensic identifier being associated with a content user.

US 2006/062426A1 relates to associating content with usage rights where the content comprises a digital watermark embedded therein.

"Digital Watermarking: Enhancing Consumer Access to Entertainment Content, Protecting Copyrights" (Feb. 5, 2007) is a presentation providing an overview of digital watermarking including example applications of digital watermarking.

### SUMMARY

Embodiments of the present invention may provide for tracking media consumption by using a watermark identifier inserted into an asset prior to processing and conversion for different devices used by end users to access the content. The watermark identifier may include a minimal amount of data, may remain with the asset during processing and conversion for different devices, and may also remain with the asset during reassignment to various networks. Accordingly, the watermark identifier may provide for improved and simplified tracking of media consumption across multiple distribution paths and network reassignments.

According to an example embodiment of the present invention, a computer-implemented method of watermarking content for tracking of media consumption may include creating, by a computer processor, at least one copy of a mezzanine asset for distribution to at least one user, the mezzanine asset being watermarked with a watermark identifier, and the at least one copy including a copy of the watermark identifier.

In one example variant of this embodiment, the mezzanine asset is generated by copying an asset to which a base identifier unique to the asset is assigned.

In one example variant of this embodiment, the mezzanine asset is assigned to a network, the assignment to the network being recorded by a link between the watermark identifier and a network identifier, and the network identifier includes at least one of a unique identifier and a window of time during which the mezzanine asset is available on the network.

In one example variant of this embodiment, the base identifier, the network identifier, and the watermark identifier are recorded, and linked to each other, in a database.

In one example variant of this embodiment, the at least one copy includes a copy identifier.

In one example variant of this embodiment, the copy identifier includes a unique identifier.

In one example embodiment of the method, the method may further provide for recording the copy identifier in the database, and linking the copy identifier to the base identifier, the network identifier, and the watermark identifier in the database.

In one example variant of this embodiment, the watermark identifier includes at least one of a unique identifier and a time stamp.

### SUMMARY

According to the present invention there is provided a computer-implemented method of watermarking media content, as defined in the claims. There is also provided a hardware computer-readable medium storing a computer program comprising instructions which, when executed by a computer, cause the computer to perform the method, and a computer processor programmed to perform the method.

Embodiments of the present invention may provide for tracking media consumption by using a watermark identifier inserted into an asset prior to processing and conversion for different devices used by end users to access the content. The watermark identifier may include a minimal amount of data, may remain with the asset during processing and conversion for different devices, and may also remain with the asset during reassignment to various networks. Accordingly, the watermark identifier may provide for improved and simplified tracking of media consumption across multiple distribution paths and network reassignments.

According to an example embodiment of the present invention, a computer-implemented method of watermarking content for tracking of media consumption may include creating, by a computer processor, at least one copy of a mezzanine asset for distribution to at least one user, the mezzanine asset being watermarked with a watermark identifier, and the at least one copy including a copy of the watermark identifier.

In one example variant of this embodiment, the mezzanine asset is generated by copying an asset to which a base identifier unique to the asset is assigned.

In one example variant of this embodiment, the mezzanine asset is assigned to a network, the assignment to the network being recorded by a link between the watermark identifier and a network identifier, and the network identifier includes at least one of a unique identifier and a window of time during which the mezzanine asset is available on the network.

In one example variant of this embodiment, the base identifier, the network identifier, and the watermark identifier are recorded, and linked to each other, in a database.

In one example variant of this embodiment, the at least one copy includes a copy identifier.

In one example variant of this embodiment, the copy identifier includes a unique identifier.

In one example embodiment of the method, the method may further provide for recording the copy identifier in the database, and linking the copy identifier to the base identifier, the network identifier, and the watermark identifier in the database.

In one example variant of this embodiment, the watermark identifier includes at least one of a unique identifier and a time stamp.

In one example variant of this embodiment, the time stamp is relative to a start of a running time of the mezzanine asset.

In one example variant of this embodiment, the watermark identifier is at least one of an audio watermark and a video watermark inserted into the mezzanine asset.

In one example embodiment of the method, the method may further provide for processing the at least one copy of the mezzanine asset for distribution based on requirements of the at least one user, the at least one copy maintaining the copy of the watermark identifier after the processing.

In one example embodiment of the method, the method may further provide for distributing the at least one copy of the mezzanine asset to the at least one user.

In one example variant of this embodiment, the watermark identifier of the at least one copy distributed to the at least one user is identifiable by an end user device and is processable for determining the asset and the network to which the at least one copy is linked based on links between the base identifier, the network identifier, and the watermark identifier in the database.

In one example variant of this embodiment, after reassignment of the mezzanine asset to another network, the reassignment occurring subsequent to creation of the mezzanine asset including the watermark identifier, the watermark identifier is processable for identifying the another network by a change of a link from the watermark identifier to point to a different network identifier assigned to the another network.

In one example variant of this embodiment, the mezzanine asset includes at least one of video content and audio content.

In one example variant of this embodiment, the mezzanine asset includes at least one of movies, television shows, radio shows, video-on-demand and Web content.

According to an example embodiment of the present invention, a hardware computer-readable medium having stored thereon instructions executable by a processor, the instructions which, when executed by the processor, cause the processor to perform a method of tracking media consumption, may be provided. The method may include creating at least one copy of a mezzanine asset for distribution to at least one user, the mezzanine asset being watermarked with a watermark identifier, and the at least one copy including a copy of the watermark identifier.

According to an example embodiment of the present invention, a transmission method may include transmitting instructions executable by a processor, the instructions which, when executed by the processor, cause the processor to perform a method of tracking media consumption. The tracking method may include creating at least one copy of a mezzanine asset for distribution to at least one user, the mezzanine asset being watermarked with a watermark identifier, and the at least one copy including a copy of the watermark identifier.

According to an example embodiment of the present invention, a system for tracking media consumption may include a computer processor configured to create at least one copy of a mezzanine asset for distribution to at least one user, the mezzanine asset being watermarked with a watermark identifier, and the at least one copy including a copy of the watermark identifier.

According to an example embodiment of the present invention, a computer-implemented method for tracking media consumption may include obtaining, by a computer processor, information regarding a watermark in a consumed copy of a media asset assigned to a network, based on identification links, determining, by the processor, an asset identification and a network identification to which the watermark is linked, and based on the determination, recording, by the processor, a consumption of the asset in association with the network.

According to an example embodiment of the present invention, a computer-implemented method for tracking media consumption may include: storing an identification of a media asset; storing an identification of a network to which the asset is assigned; generating a base copy of the media asset, the base copy including a watermark processable for tracking consumption of the media asset; storing an identification of the base copy; linking the stored base copy identification, the stored network identification, and the stored asset identification; and responsive to each of a plurality of user requests for the media asset: generating a respective copy of the base copy; and transmitting the respective copy of the base copy.

The respective copies may be provided as videos-on-demand.

The various features and embodiments described herein may be provided in various combinations.

### BRIEF DESCRIPTION OF THE DRAWINGS

Figure 1 is a schematic diagram illustrating an exemplary system of tracking media consumption according to an example embodiment of the present invention.
Figure 2 is a schematic flow diagram illustrating an exemplary method of tracking media consumption according to an example embodiment of the present invention.

### DETAILED DESCRIPTION OF EXAMPLE EMBODIMENTS

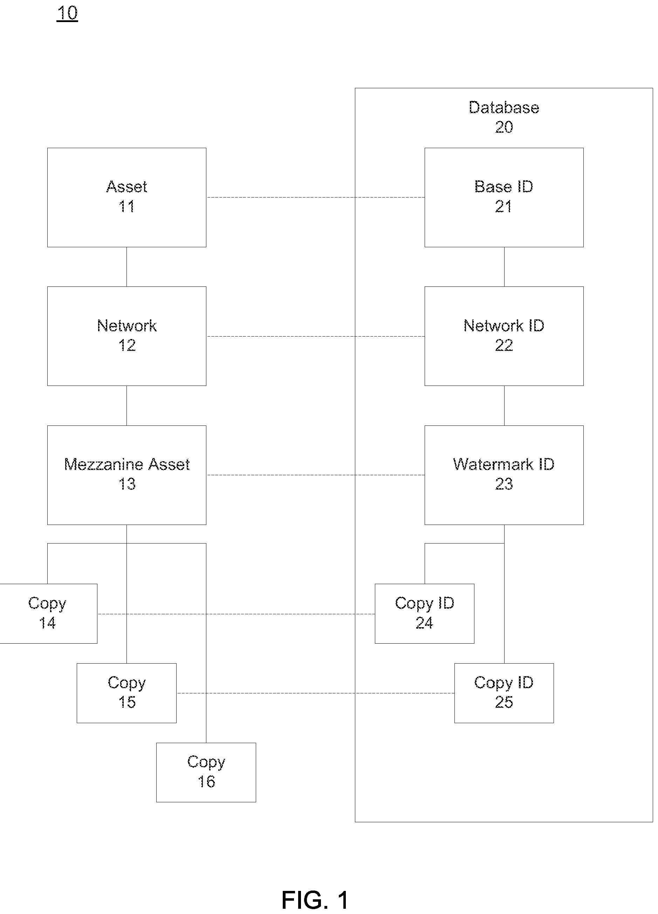

Figure 1 illustrates a schematic diagram of an exemplary system 10 of tracking media consumption according to an example embodiment of the present invention.

As shown in Figure 1, the system 10 may include an asset 11, a network 12, a mezzanine asset 13, copies 14, 15, 16 of the mezzanine asset 13, and a database 20. The asset 11 may include original versions, i.e., master versions, of recorded content, live content, movies, television shows, radio shows, and other audio and/or video content or programs. The network 12 may include a television, radio, or other network that delivers content to end users. The mezzanine asset 13 may be a copy, e.g., a first working copy, of the asset 11. Further, the copies 14, 15, 16 of the mezzanine asset 13 may be configured for distribution to particular end users' devices, for example, televisions, radios, mobile content devices, telephones, computers, and others, and the copies 14, 15, 16 may be further processed depending on the distribution path and/or devices. The database 20 may be used for storing and/or organizing data related to the system via which associations among the data may be recorded and/or discovered.

The asset 11 may be an original, or master, version of a particular program. It may be preferred that the master version of a program be kept in as pristine a condition as possible. For example, the asset 11 may be an original analog tape of a program, or an original digital recording of a program. Accordingly, very little, if any, processing and/or conversion may be performed on the master version of a program, i.e., the asset 11. The asset 11 may be assigned a base identifier 21 that may constitute a unique identification number. For example, the unique identification number may be randomly generated. Any identification number assignment scheme may be used as long as each asset 11 is uniquely identified. Further, the base identifier 21 may be recorded in the database 20. All subsequent entries in the database related to the base identifier 21 of asset 11 may be linked to the base identifier 21 so that a positive identification of the asset 11 may be possible. The links to the base identifier 21 will be further discussed herein.

The asset 11 may also be assigned to a particular network 12 and made available to end users on that network 12. In this regard, the asset 11 may be made available to users during a specified window of time, for example, a certain number of hours, days, weeks, or months. The network 12 may be assigned an identification number that is unique from all other networks. Accordingly, the asset 11 may be scheduled for a network 12 by assigning a network identifier 22. The network identifier 22 may identify a currently assigned network 12, and may also identify a window of time during which the asset 11 will be available for access by users. Further, the network identifier 22 may be recorded in the database 20. In this regard, the network identifier 22 may be linked to the base identifier 21 in the database 20. By this link, it may be possible to identify the asset 11, the network 12 to which the asset 11 is assigned, and also the window of time during which the asset 11 is available on the network 12.

The asset 11 may be copied to create a mezzanine asset 13 that may function as the first working copy of the asset 11 because it is generally preferred to maintain the master version of a program unaltered. For example, the mezzanine asset 13 may be a converted digital version of an original analog asset 11, e.g., an analog tape. The mezzanine asset 13 may be processed and/or converted as necessary. For example, the mezzanine asset 13 may undergo data compression, loudness correction, and/or other data processing. Moreover, the mezzanine asset 13 may undergo watermarking by which it is assigned a watermark identifier 23. The watermark identifier 23 may include a unique identifier (which may constitute a unique identification number), a time stamp and/or other data types. The watermark identifier 23 may be inserted into the mezzanine asset 13 before any copies of the mezzanine asset 13 have been requested by end users. Thus, the mezzanine asset 13 acts as the first working copy from which all later copies of the program are derived. As a result, all subsequent copies derived from the mezzanine asset 13 will also include the watermark identifier 23. Further, the watermark identifier 23 may be recorded in the database 20. In this regard, the watermark identifier 23 may be linked to the network identifier 22 and the base identifier 21 in the database 20. By these links, it may be possible to identify the asset 11, the network 12 to which the asset 11 is assigned, and also the window of time during which the asset 11 is available on the network 12 by having knowledge of the watermark identifier 23 inserted into the mezzanine asset 13.

It may be possible to use the base identifier 21 of the asset 11 as the watermark identifier 23 of the mezzanine asset 13. However, if the base identifier 21 is a relatively long unique identification number, the inclusion of such a long unique identifier by watermarking into the mezzanine asset 13 may not be desirable. That is, the watermarking may become audible/visible to an end user or otherwise detrimentally affect the quality of the content. Further, there may be additional limitations on the length of a watermark identifier 23 imposed by the watermarking process itself. Accordingly, the watermark identifier 23 may be unique from the base identifier 21 due to these and other factors.

Based on the type of content, the time stamps inserted by watermarking for particular content may provide different data. For linear content, the time stamp may correlate to a time of day during which the program was scheduled to be broadcast. For example, if a program is linearly scheduled to be broadcast from 8:00PM to 9:00PM, the time stamps inserted by watermarking may include times between 8:00:00PM and 9:00:00PM, inclusive. Thus, one example time stamp may be 8:30:14PM, which designates the 14 second mark after 8:30PM. For nonlinear content, the time stamp may correlate to a time duration from the beginning of the program. For example, if a program is provided as nonlinear content and has a running time of exactly 2 hours, the time stamps inserted by watermarking may include times between 0:00:00, marking the beginning of the program, and 2:00:00, marking the end of the program, inclusive. Thus, one example time stamp may be 1:15:40, which designates the 1 hour, 15 minute, 40 second mark of the program measured from its beginning. Accordingly, time stamps for, for example, movies, videos, music, and/or other content having a running time, may provide data related to the running time of the asset 11. Moreover, time stamps are not necessary for, for example, photographs, images, or other content that does not have a running time, since an identification of a network and an asset is sufficient to fully identify access by end users of such static content.

The mezzanine asset 13 may then be copied, yielding any number of copies, for example, copies 14, 15, 16, as shown in Figure 1. Although the exemplary embodiment of the system 10 shown in Figure 1 illustrates only three copies 14, 15, 16, it is understood that any number of copies may be distributed to any number of end users. The copies 14, 15, 16 may be created from the mezzanine asset 13 when the content of the mezzanine asset 13 is requested by end users. In order to distribute copies to particular end users, copies 14, 15, 16 may require further processing such as, for example, data compression, modifications to aspect ratio, and/or alterations to bandwidth, depending on delivery needs, viewer types, and/or other variables of the requesting end users' devices. The further processing may include, for example, manipulation of video, audio and/or other aspects of copies 14, 15, 16 to meet each delivery system. For example, copy 14 may be requested for access on a computer, copy 15 may be requested for access on a television, and copy 16 may be requested for access on a mobile phone. In each case, the copies 14, 15, 16 may be processed in accordance with the delivery needs of each requesting user's device and/or distribution path. After completion of the processing, the copies 14, 15, 16 may then be distributed to the requesting end users.

Because the watermark identifier 23 is assigned to the mezzanine asset 13, and all subsequent copies 14, 15, 16 are created from the mezzanine asset 13, the watermark identifier 23 may remain with any subsequent copies 14, 15, 16. Thus, each copy 14, 15, 16 may be traced back to the network identifier 22 and the base identifier 21 in the database 20 via links with the watermark identifier 23. Additionally, if there are other processes in the path from the mezzanine asset 13 through distribution to the end user, the watermark identifier 23 may be carried through all the way to the end user, thereby allowing identification of the original asset 11 and network 12 by the links in the database 20.

For internal recording, tracking, deleting, scheduling, and/or other related tasks by an owner or distributor of the asset 11, each copy 14, 15, 16 may be further assigned a unique copy identifier (which may constitute a unique identification number). The copy identifiers may be used to identify each individual copy 14, 15, 16 of a mezzanine asset 13 since the watermark identifier 23 included in each copy is not unique to each copy, and thus does not differentiate one copy from any others. This information may be helpful in understanding media consumption and the distribution of content to various types of user devices. For example, if copies 14, 15, 16 are requested for access on a computer, a television, and a mobile phone, respectively, each copy may be assigned a copy identifier unique from any other copy identifier. As shown in Figure 1, each copy 14, 15 may be assigned a unique copy identifier 24, 25, respectively. The copy identifier 24, 25 may be associated with a copy for a particular device or requesting user. Further, the unique copy identifiers 24, 25 may be recorded in the database 20. In this regard, the copy identifiers 24, 25 may also be linked to the watermark identifier 23, the network identifier 22, and the base identifier 21 in the database 20. In some situations, however, further processing prior to distribution to end users may be performed by entities outside the control of an owner or distributor of the asset 11, and those entities may be authorized to create additional copies of the mezzanine asset 13 for distribution. However, the owner or distributor may not be able to track each copy created and/or processed by such outside entities, and thus, a unique copy identifier may not be assigned by the owner or distributor to a copy, such as a copy 16 as shown in Figure 1, for example. Nonetheless, a copy 16, as shown in Figure 1, which is not assigned a unique copy identifier by the owner or distributor, may still be traced back to the network identifier 22 and the base identifier 21 in the database 20 via the watermark identifier 23 that is maintained in all copies of the mezzanine asset 13. Although the above discussion refers to an owner or distributor of an asset 11, it is understood that these designations may further include any individual or entity that is interested in tracking media consumption.

If the asset 11 is later reassigned to a different network 12, a unique network identifier 22 assigned to the new network 12 may be associated with the base identifier 21 of the asset 11 and the watermark identifier 23. The base identifier 21 of the asset 11 and the watermark identifier 23 of the mezzanine asset 13 may be maintained as previously recorded in the database 20. Thus, in an example embodiment, only a single base identifier 21 and a single watermark identifier 23 are used while the asset 11 is reassigned to and traverses multiple networks 12.

Accordingly, by the system 10 as shown in Figure 1, media consumption may be tracked using a single watermark identifier 23 inserted into a mezzanine asset 13, by which the asset 11 and assigned network 12 may be credited when accessed by users. By tracing the links between the various identifiers 21, 22, 23, 24, 25 recorded in the database 20, an asset 11 and assigned network 12 for a copy 14, 15, 16 may be discovered. Thus, the database 20 may store a heritage of links of the various identifiers starting from the base identifier 21 all the way through the distribution chain to copies delivered to end users. Although Figure 1 shows only a single database 20, it is understood that other embodiments of the database structure may be used, for example, including multiple databases, as long as operative links are maintained between the various identifiers, as shown in Figure 1. Further, media consumption may be tracked across multiple distribution paths, e.g., multiple copies 14, 15, 16 that may be further processed, and across multiple network reassignments using a single watermark identifier 23 by which to credit the asset 11 and assigned network 12.

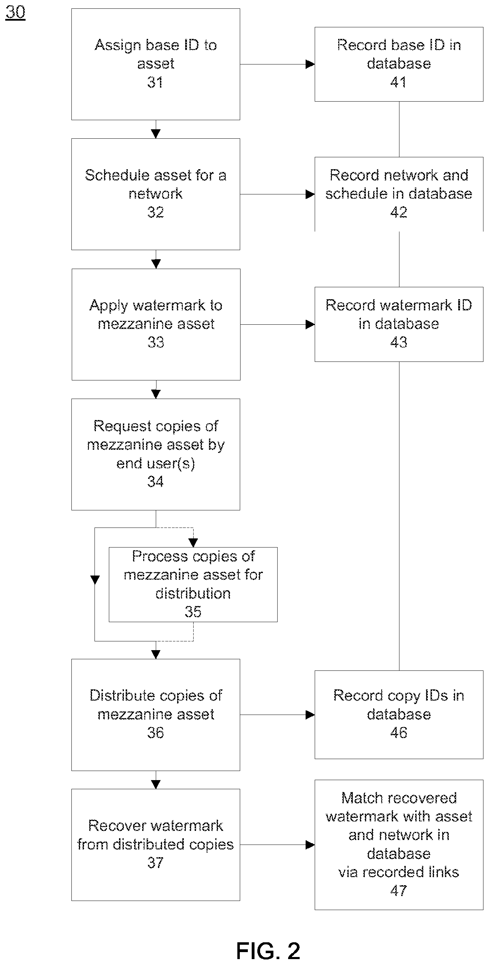

Figure 2 illustrates a schematic flow diagram of an exemplary method 30 of tracking media consumption according to an example embodiment of the present invention. The exemplary method 30 as shown in Figure 2 is discussed herein with reference to the exemplary system 10 as shown in Figure 1.

At step 31, a base identifier 21 may be assigned to an asset 11 that may be an original, or master, version of a particular program. The base identifier 21 may uniquely identify a particular asset 11, and may constitute a unique identification number. At step 41, the base identifier 21 of the asset 11 may be recorded in a database 20. All subsequent entries in the database related to the base identifier 21 of asset 11 may be linked to the base identifier 21 so that a positive identification of the asset 11 may be possible.

At step 32, the asset 11 may be assigned to a particular network 12 and made available to end users on that network 12. In this regard, the asset 11 may be made available to users during a specified window of time, for example, a certain number of days, weeks, or months. The network 12 may be assigned a unique identification number. A network identifier 22 may be assigned to the asset 11 that may identify a currently assigned network 12, and may also identify a window of time during which the asset 11 will be available for access by users. At step 42, the network identifier 22 may be recorded in the database 20. The network identifier 22 may be linked to the base identifier 21 in the database 20. By this link, it may be possible to identify the asset 11, the network 12 to which the asset 11 is assigned, and also the window of time during which the asset 11 is available on the network 12.

At step 33, the asset 11 may be copied to create a mezzanine asset 13 that may function as the first working copy of the asset 11 because it is generally preferred to maintain the master version of a program unaltered. The mezzanine asset 13 may be processed and/or converted as necessary. For example, the mezzanine asset 13 may undergo data compression, loudness correction, and/or other data processing. Moreover, the mezzanine asset 13 may undergo watermarking by which a watermark identifier 23 is inserted into the mezzanine asset 13. The watermark identifier 23 may include a unique identifier (which may constitute a unique identification number), a time stamp and/or other data types, as described above. The watermark identifier 23 may be inserted into the mezzanine asset 13 before any copies of the mezzanine asset 13 have been requested by end users. Thus, the mezzanine asset 13 acts as the first working copy from which all later copies of the program are derived. As a result, all subsequent copies derived from the mezzanine asset 13 will also include the watermark identifier 23. At step 43, the watermark identifier 23 may be recorded in the database 20. The watermark identifier 23 may be linked to the network identifier 22 and the base identifier 21 in the database 20. By these links, it may be possible to identify the asset 11, the network 12 to which the asset 11 is assigned, and also the window of time during which the asset 11 is available on the network 12 by having knowledge of the watermark identifier 23 inserted into the mezzanine asset 13.

At step 34, copies 14, 15, 16 of the mezzanine asset 13 may be requested by end users. Although the exemplary embodiment of the system 10 shown in Figure 1 illustrates only three copies 14, 15, 16, it is understood that any number of copies may be distributed to any number of end users. The copies 14, 15, 16 may be created based on the mezzanine asset 13 including the watermark identifier 23.

At step 35, the copies 14, 15, 16 may require further processing such as, for example, data compression, modifications to aspect ratio, and/or alterations to bandwidth, depending on delivery needs, viewer types, and/or other variables. The further processing may include, for example, manipulation of video, audio and/or other aspects of copies 14, 15, 16 to meet each delivery system. For example, copy 14 may be requested for access on a computer, copy 15 may be requested for access on a television, and copy 16 may be requested for access on a mobile phone. In each case, the copies 14, 15, 16 may be processed in accordance with the delivery needs of each requesting user's device or distribution path. Alternatively, if no further processing is required, the method 30 may skip step 35 and proceed directly to step 36.

At step 36, the copies 14, 15, 16, after completion of any further processing, if required, may be distributed to end users. Because the watermark identifier 23 is assigned to the mezzanine asset 13, and all subsequent copies 14, 15, 16 are created from the mezzanine asset 13, the watermark identifier 23 may remain with any subsequent copies 14, 15, 16. Thus, each copy 14, 15, 16 may be traced back to the network identifier 22 and the base identifier 21 in the database 20 via links with the watermark identifier 23. Additionally, if there are other processes in the path from the mezzanine asset 13 through distribution to the end user, the watermark identifier 23 may be carried through all the way to the end user, thereby allowing identification of the original asset 11 and network 12 by the links in the database 20.

For internal recording, tracking, deleting, scheduling, and/or other related tasks by an owner or distributor of an asset 11, each copy 14, 15, 16 may be further assigned a unique copy identifier, in order to differentiate each copy from any others. For example, if copies 14, 15, 16 are requested for access on a computer, a television, and a mobile phone, respectively, each copy may be assigned a copy identifier unique from any other copy identifier. At step 46, the unique copy identifiers may be recorded in the database 20, and the copy identifiers may be linked to the watermark identifier 23, the network identifier 22, and the base identifier 21 in the database 20. In some situations, however, further processing prior to distribution to end users may be performed by entities outside the owner or distributor, and those entities may be authorized to create additional copies of the mezzanine asset 13 for distribution. However, the owner or distributor may not be able to track each copy created and/or processed by such outside entities, and thus, a unique copy identifier might not be assigned by the owner or distributor to a copy, such as a copy 16 as shown in Figure 1, for example. Nonetheless, a copy 16, as shown in Figure 1, which is not assigned a unique copy identifier by an owner or distributor, may still be traced back to the network identifier 22 and the base identifier 21 in the database 20 via the watermark identifier 23 that is maintained in all copies of the mezzanine asset 13. Although the above discussion refers to an owner or distributor of an asset 11, it is understood that these designations may further include any individual or entity that is interested in tracking media consumption.

At step 37, the watermark identifier 23 may be recovered from distributed copies 14, 15, 16. The watermark identifier 23 may be recovered by a data collection device that listens to (in the case of audio watermarks) and/or views (in the case of video watermarks) the content as it is output to an end user. Further, the watermark identifier 23 may be processed by the data collection device and/or at other processing center(s) and delivered to an entity interested in tracking and analyzing such data. At step 47, using the watermark identifier 23, the particular copy 14, 15, 16 may be traced back to the original asset 11 and assigned network 12 via links in the database 20 between the various identifiers 21, 22, 23, 24, 25. That is, the watermark identifier 23 may be matched with the network identifier 22 of the network 12 to which it is linked in the database 20, thereby identifying the assigned network 12. Then, the watermark identifier 23 may be matched with the base identifier 21 of the asset 11 to which it is linked in the database 20, thereby identifying the asset 11. Thus, by the use of a single watermark identifier 13 and the links between various identifiers in the database 20, an asset 11 and assigned network 12 for a particular copy accessed by an end user may be identified.

Following the identification of the asset 11 and assigned network 12, the appropriate credits to the asset 11 and network 12 may be applied. Further, if the watermark identifier 23 also included a time stamp, the appropriate credits to the asset 11 and network 12 may be adjusted based on the time stamp. For example, the duration of the play and/or an identification of what portion of the content was accessed may be recorded in the retrieved time stamps of the watermark identifier 23. In addition, further data included in the watermark identifier 23 may be used to adjust the appropriate credits applied to the asset 11 and network 12.

Moreover, if the asset 11 is later reassigned to a different network 12, a unique network identifier 22 assigned to the new network 12 may be associated with the base identifier 21 of the asset 11 and the watermark identifier 23. Thus, at step 32, the asset 11 may be scheduled for the new network 12, and at step 42, the network identifier 22 of the new network 12 may be recorded in the database 20, which network identifier 22 may be linked to the base identifier 21 in the database 20. However, steps 31 and 33 of the method 30 need not be repeated because the base identifier 21 of the asset 11 and the watermark identifier 23 of the mezzanine asset 13 may be maintained as previously recorded in the database 20. Thus, in an example embodiment, only a single base identifier 21 and a single watermark identifier 23 are used while the asset 11 is reassigned to and traverses multiple networks 12.

Accordingly, by the method 30 as shown in Figure 2, media consumption may be tracked using a single watermark identifier 23 inserted into a mezzanine asset 13 at step 33, by which the asset 11 and assigned network 12 may be credited when accessed by end users. By tracing the links between the various identifiers 21, 22, 23, 24, 25 recorded in the database 20, an asset 11 and assigned network 12 for a copy 14, 15, 16 may be discovered after recovering the watermark identifier 23 at step 37. Thus, a heritage of links of the various identifiers may be stored in the database 20 starting from the base identifier 21 at steps 31, 41 all the way through the distribution chain to copies delivered to end users at steps 36, 46. Further, media consumption may be tracked across multiple distribution paths, e.g., multiple copies 14, 15, 16 that may be further processed at step 35 and distributed at step 36, and across multiple network reassignments at step 32, using a single watermark identifier 23 by which to credit the asset 11 and assigned network 12.

An example embodiment of the present invention is directed to one or more processors, which may be implemented using any conventional processing circuit and device or combination thereof, e.g., a Central Processing Unit (CPU) of a Personal Computer (PC) or other workstation processor, to execute code provided, e.g., on a hardware computer-readable medium including any conventional memory device, to perform any of the methods described herein, alone or in combination. The one or more processors may be embodied in a server or user terminal or combination thereof. The user terminal may be embodied, for example, as a desktop, laptop, hand-held device, Personal Digital Assistant (PDA), television set-top Internet appliance, mobile telephone, smart phone, etc., or as a combination of one or more thereof. The memory device may include any conventional permanent and/or temporary memory circuits or combination thereof, a non-exhaustive list of which includes Random Access Memory (RAM), Read Only Memory (ROM), Compact Disks (CD), Digital Versatile Disk (DVD), and magnetic tape.

An example embodiment of the present invention is directed to one or more hardware-implemented computer readable media, e.g., as described above, having stored thereon instructions executable by a processor, which, when executed, cause one or more processors to perform the example methods described above, or portions thereof.

An example embodiment of the present invention is directed to a method of transmitting instructions executable by one or more processors, the instructions, when executed, causing the processor(s) to perform the example methods described above, or portions thereof.

An example embodiment of the present invention is directed to a watermarking paradigm as described above, which may include one or more memory devices, such as described above, storing one or more, e.g., all, of the IDs described above, and/or which may include one or more processing devices, such as those described above, for implementing the described methods using the stored IDs.

Those skilled in the art can appreciate from the foregoing description that the present invention can be implemented in a variety of forms. Therefore, while the embodiments of this invention have been described in connection with particular examples thereof, the true scope of the embodiments of the invention should not be so limited since other modifications will become apparent to the skilled practitioner upon a study of the drawings, specification, and following claims.

## Claims

1. A computer-implemented method of watermarking media content, the method comprising:
obtaining, by a computer processor, a processed copy (13) of an asset (11) that has been watermarked with a single watermark identifier (23);
copying (35) by the computer processor, the processed copy (13) to create a plurality of copies (14, 15, 16) of the processed copy (13) for distribution (36) to a plurality of users, the copying (35) of the processed copy (13) causing the plurality of copies (14, 15, 16) to each include a copy of the watermark identifier (23),
**characterized in that**:
the watermark identifier (23) is recorded (43) in a database (20) in linked association with a first network identifier (22) that identifies the first network (12) to which the asset (11) is assigned; and
after reassignment of the asset (11) from the first network (12) to a second network (12) for distribution, associating in the database the watermark identifier (23) with a second network identifier (22) that identifies the second network (12),
wherein the media consumption across the assigned networks is tracked using the single watermark identifier (23) inserted in the processed copy and stored in the database.

2. The method of claim 1, wherein at least one of the plurality of copies (14, 15, 16) is provided as a video-on-demand.

3. The method of claim 1, wherein a base identifier (21) unique to the asset is assigned (31) to the asset (11).

4. The method of claim 3, wherein
the network identifier (22) further includes a window of time during which the processed copy (13) is available on the network.

5. The method of claim 4, wherein each of at least one of the plurality of copies (14, 15, 16) includes a copy identifier (24, 25).

6. The method of claim 5, wherein each copy identifier (24, 25) is unique.

7. The method of claim 5, further comprising:
recording (46) the copy identifier (24, 25) in the database; and
linking the copy identifier (24, 25) to the base identifier (21), the network identifier (22), and the watermark identifier (23) in the database.

8. The method of claim 1, wherein the watermark identifier (23) includes a time stamp.

9. The method of claim 8, wherein the time stamp is relative to a start of a running time of the processed copy (13).

10. The method of claim 1, wherein the watermark identifier (23) is at least one of an audio watermark and a video watermark inserted into the processed copy (13).

11. The method of claim 1, further comprising:
processing (35) the plurality of copies (14, 15, 16) for distribution based on requirements of the plurality of users, the plurality of copies (14, 15, 16) each maintaining the copy of the watermark identifier (23) after the processing (35).

12. The method of claim 3, further comprising:
distributing (36) the plurality of copies (14, 15, 16) to the plurality of users.

13. The method of claim12, wherein the watermark identifier (23) is identifiable by an end user device and is processable (47) for determining the asset (11) and the first network (12) based on the linked association between the first network identifier (22) and the watermark identifier (23) in the database (20) and based on a linked association between the watermark identifier (23) and the base identifier (21).

14. The method of claim 1, wherein the processed copy (13) includes at least one of video content and audio content.

15. The method of claim 1, wherein the processed copy (13) includes at least one of movies, television shows, radio shows, video-on-demand and Web content.

16. The method of claim 1, wherein the plurality of copies (14, 15, 16) are further processed (35) to place them in condition for distribution (36) to the plurality of users.

17. A hardware computer-readable medium storing a computer program comprising instructions which, when executed by a computer, cause the computer to perform each of the method steps of any of claims 1 to 16.

18. A computer processor programmed to perform each of the method of steps of any of claims 1 to 16.

## Patentansprüche

1. Computerimplementiertes Verfahren zum Markieren von Medieninhalten mit einem Wasserzeichen, wobei das Verfahren folgendes umfasst:
durch einen Computerprozessor, Erhalten einer verarbeiteten Kopie (13) eines Guts (11), das mit einer einzelnen Wasserzeichenkennung (23) mit einem Wasserzeichen markiert worden ist;
durch den Computerprozessor, Kopieren (35) der verarbeiteten Kopie (13), um eine Mehrzahl von Kopien (14, 15, 16) der verarbeiteten Kopie (13) zur Verteilung (36) an eine Mehrzahl von Benutzer zu erzeugen, wobei das Kopieren (35) der verarbeiteten Kopie (13) bewirkt, dass jede der Mehrzahl von Kopien (14, 15, 16) eine Kopie der Wasserzeichenkennung (23) enthält;
**dadurch gekennzeichnet, dass**:
die Wasserzeichenkennung (23) in einer Datenbank (20) in einer verknüpften Zuordnung mit einer ersten Netzwerkkennung (22) aufgezeichnet (43) wird, welche das erste Netzwerk (12) identifiziert, dem das Gut (11) zugeordnet ist; und
nach der Neuzuordnung des Guts (11) von dem ersten Netzwerk (12) zu einem zweiten Netzwerk (12) zur Verteilung, Zuordnen der Wasserzeichenkennung (23) in der Datenbank zu einer zweiten Netzwerkkennung (22), die das zweite Netzwerk (12) identifiziert;
wobei der Medienkonsum über die zugeordneten Netzwerke unter Verwendung der einzelnen Wasserzeichenkennung (23) verfolgt wird, die in die verarbeitete Kopie eingefügt ist und in der Datenbank gespeichert ist.

2. Verfahren nach Anspruch 1, wobei wenigstens eine der Mehrzahl von Kopien (14, 15, 16) als Video-on-Demand bereitgestellt wird.

3. Verfahren nach Anspruch 1, wobei eine für das Gut eindeutige Basiskennung (21) dem Gut (11) zugeordnet (31) wird.

4. Verfahren nach Anspruch 3, wobei:
die Netzwerkkennung (22) ferner ein Zeitfenster aufweist, während dem die verarbeitete Kopie (13) in dem Netzwerk verfügbar ist.

5. Verfahren nach Anspruch 4, wobei jede der wenigstens einen Kopie der Mehrzahl von Kopien (14, 15, 16) eine Kopiekennung (24, 25) aufweist.

6. Verfahren nach Anspruch 5, wobei jede Kopiekennung (24, 25) eindeutig ist.

7. Verfahren nach Anspruch 5, wobei dieses ferner folgendes umfasst:
Aufzeichnen (46) der Kopiekennung (24, 25) in der Datenbank; und
Verknüpfen der Kopiekennung (24, 25) mit der Basiskennung (21), der Netzwerkkennung (22) und der Wasserzeichenkennung (23) in der Datenbank.

8. Verfahren nach Anspruch 1, wobei die Wasserzeichenkennung (23) einen Zeitstempel enthält.

9. Verfahren nach Anspruch 8, wobei der Zeitstempel im Verhältnis zu einem Beginn einer Laufzeit der verarbeiteten Kopie (13) steht.

10. Verfahren nach Anspruch 1, wobei die Wasserzeichenkennung (23) wenigstens ein Audio-Wasserzeichen oder ein Video-Wasserzeichen ist, das in die verarbeitete Kopie (13) eingefügt ist.

11. Verfahren nach Anspruch 1, wobei dieses ferner folgendes umfasst:
Verarbeiten (35) der Mehrzahl von Kopien (14, 15, 16) zur Verteilung auf der Basis von Anforderungen der Mehrzahl von Benutzern, wobei jede Kopie der Mehrzahl von Kopien (14, 15, 16) die Kopie der Wasserzeichenkennung (23) nach der Verarbeitung (35) beibehält.

12. Verfahren nach Anspruch 3, wobei dieses ferner folgendes umfasst:
Verteilen (36) der Mehrzahl von Kopien (14, 15, 16) an die Mehrzahl von Benutzern.

13. Verfahren nach Anspruch 12, wobei die Wasserzeichenkennung (23) durch eine Endverbrauchervorrichtung identifiziert werden kann und verarbeitet (47) werden kann zur Bestimmung des Guts (11) und des ersten Netzwerks (12) auf der Basis der verknüpften Zuordnung zwischen der ersten Netzwerkkennung (22) und der Wasserzeichenkennung (23) in der Datenbank (20) und auf der Basis der verknüpften Zuordnung zwischen der Wasserzeichenkennung (23) und der Basiskennung (21).

14. Verfahren nach Anspruch 1, wobei die verarbeitete Kopie (13) wenigstens Videoinhalt oder Audioinhalt enthält.

15. Verfahren nach Anspruch 1, wobei die verarbeitete Kopie (13) wenigstens eines der folgenden enthält: Filme, Fernsehsendungen, Radiosendungen, Video-on-Demand oder Webinhalte.

16. Verfahren nach Anspruch 1, wobei die Mehrzahl von Kopien (14, 15, 16) ferner so verarbeitetet (35) werden, dass sie in einem Zustand für eine Verteilung (36) an die Mehrzahl von Benutzern platziert werden.

17. Computerlesbares Hardwaremedium, das ein Computerprogramm speichert, das Anweisungen umfasst, die, wenn sie durch einen Computer ausgeführt werden, bewirken, dass der Computer jeden der Verfahrensschritte der Ansprüche 1 bis 16 ausführt.

18. Computerprozessor, der so programmiert ist, dass er jeden der Verfahrensschritte der Ansprüche 1 bis 16 ausführt.

## Revendications

1. Procédé mis en oeuvre par ordinateur pour filigraner du contenu multimédia, le procédé comprenant les étapes consistant à :
obtenir, par un processeur informatique, une copie traitée (13) d'un actif (11) qui a été filigrané avec un identifiant de filigrane unique (23) ;
copier (35) par le processeur informatique, la copie traitée (13) pour créer une pluralité de copies (14, 15, 16) de la copie traitée (13) pour distribution (36) à une pluralité d'utilisateurs, la copie (35) de la copie traitée (13) amenant la pluralité de copies (14, 15, 16) à inclure chacune une copie de l'identifiant de filigrane (23),
**caractérisé en ce que** :
l'identifiant de filigrane (23) étant enregistré (43) dans une base de données (20) en association liée avec un premier identifiant de réseau (22) qui identifie le premier réseau (12) auquel l'actif (11) est affecté ; et
après réaffectation de l'actif (11) du premier réseau (12) à un second réseau (12) pour distribution, associer dans la base de données l'identifiant de filigrane (23) à un second identifiant de réseau (22) qui identifie le second réseau (12),
la consommation multimédia sur les réseaux affectés étant suivie en utilisant l'identifiant de filigrane (23) unique inséré dans la copie traitée et stocké dans la base de données.

2. Procédé selon la revendication 1, au moins une copie parmi la pluralité de copies (14, 15, 16) étant fournie sous forme de vidéo à la demande.

3. Procédé selon la revendication 1, un identifiant de base (21) unique à l'actif étant affecté (31) à l'actif (11).

4. Procédé selon la revendication 3, l'identifiant de réseau (22) comprenant en outre une fenêtre de temps pendant laquelle la copie traitée (13) est disponible sur le réseau.

5. Procédé selon la revendication 4, chacune de l'au moins une pluralité de copies (14, 15, 16) comprenant un identifiant de copie (24, 25).

6. Procédé selon la revendication 5, chaque identifiant de copie (24, 25) étant unique.

7. Procédé selon la revendication 5, comprenant en outre les étapes consistant à :
enregistrer (46) l'identifiant de copie (24, 25) dans la base de données ; et
lier l'identifiant de copie (24, 25) à l'identifiant de base (21), l'identifiant de réseau (22) et l'identifiant de filigrane (23) dans la base de données.

8. Procédé selon la revendication 1, l'identifiant de filigrane (23) comprenant un horodatage.

9. Procédé selon la revendication 8, l'horodatage étant relatif au début d'un temps d'exécution de la copie traitée (13).

10. Procédé selon la revendication 1, l'identifiant de filigrane (23) étant un filigrane audio et/ou un filigrane vidéo insérés dans la copie traitée (13).

11. Procédé selon la revendication 1, comprenant en outre l'étape consistant à :
traiter (35) la pluralité de copies (14, 15, 16) pour distribution sur la base des exigences de la pluralité d'utilisateurs, la pluralité de copies (14, 15, 16) maintenant chacune la copie de l'identifiant de filigrane (23) après le traitement (35).

12. Procédé selon la revendication 3, comprenant en outre l'étape consistant à :
distribuer (36) la pluralité de copies (14, 15, 16) à la pluralité d'utilisateurs.

13. Procédé selon la revendication 12, l'identifiant de filigrane (23) étant identifiable par un dispositif d'utilisateur final et pouvant être traité (47) pour déterminer l'actif (11) et le premier réseau (12) sur la base de l'association liée entre le premier identifiant de réseau (22) et l'identifiant de filigrane (23) dans la base de données (20) et de l'association liée entre l'identifiant de filigrane (23) et l'identifiant de base (21).

14. Procédé selon la revendication 1, la copie traitée (13) comprenant un contenu vidéo et/ou un contenu audio.

15. Procédé selon la revendication 1, la copie traitée (13) comprenant un film, une émission de télévision, une émission de radio, une émission de vidéo à la demande et/ou un contenu Web.

16. Procédé selon la revendication 1, la pluralité de copies (14, 15, 16) étant traitée ultérieurement (35) pour les placer en condition de distribution (36) à la pluralité d'utilisateurs.

17. Support lisible par ordinateur matériel stockant un programme informatique comprenant des instructions qui, lorsqu'elles sont exécutées par un ordinateur, amènent l'ordinateur à effectuer chacune des étapes de procédé selon l'une quelconque des revendications 1 à 16.

18. Processeur informatique programmé pour effectuer chacune des étapes de procédé selon l'une quelconque des revendications 1 à 16.
